# NEUE EUROPÄISCHE PATENTSCHRIFT

(11) **EP 1 961 515 B2**
(45) Veröffentlichungstag und Bekanntmachung des Hinweises auf die Entscheidung über den Einspruch: **14.07.2021**
(45) Hinweis auf die Patenterteilung: 12.09.2012
(21) Anmeldenummer: 08000527.5
(22) Anmeldetag: 12.01.2008
(51) Int. Cl.: B23Q 1/70, B23Q 3/12, B23Q 3/157

(54) **Kupplungseinrichtung und Kupplungselement für Werkzeughalter oder Werkstückspanneinrichtungen**
Coupling device and coupling element for a tool holder or workpiece clamps
Dispositif de couplage et élément de couplage pour un porte-outils ou des dispositifs de serrage de pièces usinées

(30) Priorität: 23.02.2007 DE 102007008837
(43) Veröffentlichungstag der Anmeldung: 27.08.2008
(73) Patentinhaber: ESA Eppinger GmbH, 73770 Denkendorf (DE)
(72) Erfinder: Neumeier, Manfred, 73733 Esslingen (DE)
(74) Vertreter: Rüger Abel Patentanwälte PartGmbB

(56) Entgegenhaltungen:
- EP-A- 1 211 017
- DE-A1- 19 940 330
- IT-A- 1 236 912

## Beschreibung

Die Erfindung betrifft eine Kupplungseinrichtung für Werkzeughalter oder Werkstückspanneinrichtungen gemäß Anspruch 1 sowie ein Kupplungselement gemäß Anspruch 14.

Beispielsweise bei CNC-gesteuerten Drehmaschinen oder Drehzentren mit beweglichen Werkzeugträgern in Gestalt von Werkzeugrevolverscheiben und dergleichen, werden Werkzeughalter zur Aufnahme von Drehwerkzeugen, Bohrwerkzeugen, Fräswerkzeugen oder sonstigen zur Fertigung erforderlichen Werkzeugen., ebenso wie Werkstückspanneinrichtungen in Gestalt von Futtern und dergleichen zum Spannen von Werkstücken verwendet, die in entsprechende Aufnahmen des Werkzeugträgers eingesetzt werden. Die Werkzeughalter oder Werkzeug- bzw. Werkstückspaneinrichtungen besitzen keinen eigenen Antrieb für ihre Spindel, vielmehr wird die Spindel über komplementäre Mitnehmerelemente formschlüssig mit einer Antriebswelle einer dem Werkzeugträger zugeordneten Antriebsquelle gekuppelt. Es gibt Revolverscheiben, die entweder an ihrer Planseite oder an ihrem Umfang eine Anzahl Aufnahmen für Werkzeughalter oder Spanneinrichtungen aufweisen, von denen jeder eine eigene Antriebswelle zugeordnet ist, wobei alle Antriebswellen gemeinsam von einer Antriebsquelle über Zahnradgetriebe angetrieben sind. Bei modernen CNC-gesteuerten Drehmaschinen oder Drehzentren finden aber heute überwiegend Revolverscheiben Verwendung, die eine ortsfeste Antriebsquelle mit einer einzigen Antriebswelle aufweisen, mit der die Spindel eines Werkzeughalters bzw. einer Spanneinrichtung bei der Positionierung der Revolverscheibe für den jeweiligen Bearbeitungsvorgang automatisch gekuppelt wird. Dies hat den Vorteil, dass lediglich der an dem Bearbeitungsvorgang beteiligte Werkzeughalter bzw. die entsprechende Spanneinrichtung angetrieben ist, während die übrigen an dem Bearbeitungsvorgang unbeteiligten Werkzeughalter und Spanneinrichtungen stillstehen.

Das Kupplungsprinzip zur Übertragung von Drehmoment von der Antriebswelle auf die Spindel ist durchweg auf DIN 1809 (Mitnehmer an Werkzeugen mit Zylinderschaft) aufgebaut. Der genormte, im Wesentlichen stegförmige Mitnehmer ist stirnseitig entweder an der Antriebswelle oder der Spindel des Werkzeughalters oder der Spanneinrichtung angeordnet und greift in eine Mitnehmernut ein, die als komplementäres Mitnehmerelement an der Spindel bzw. der Antriebswelle vorgesehen ist. Der besondere Vorteil dieses bekannten und bewährten Kupplungssystems liegt darin, dass der Kupplungsvorgang zwischen der Antriebswelle und der Spindel gleichzeitig mit der Positionierung des Werkzeugträgers, d.h. bspw. der Revolverscheibe, erfolgt. Vor und während des Kupplungsvorganges müssen sowohl der Mitnehmer als auch die Mitnehmernut in einer möglichst genau aufeinander ausgerichteten Winkelposition gehalten sein, so dass der Mitnehmer in die Mitnehmernut eingeschoben werden kann. Um dies ohne Schwierigkeiten zu ermöglichen und zum Ausgleich von Toleranzen, muss ein gewisses Spiel zwischen dem Mitnehmer und den Wänden der Mitnehmernut vorhanden sein.

In der EP-A 1 211 017 ist eine in einem Spindelgehäuse einer Bearbeitungsmaschine drehbar gelagerte Werkzeugspindel beschrieben, die zum Drehantrieb von daran befestigten Bearbeitungswerkzeugen, wie Bohrer und Fräser, bestimmt ist. An einem konzentrisch mit der Werkzeugspindel verbindbaren Antriebsteil ist ein mit Drehmeißeln bestückbarer Drehrevolver drehfest und axial verschiebbar gelagert, der über eine Mitnahmescheibe formschlüssig mit der Werkzeugspindel gekuppelt ist. Diese Kupplungseinrichtung ist weder dazu bestimmt, noch dazu geeignet, Fluchtungsfehler auszugleichen. Aus der IT 01236912 ist eine Kupplungseinrichtung für Werkzeughalter zur lösbaren formschlüssigen Kupplung einer Antriebswelle einer zugeordneten Antriebsquelle mit der zu der Antriebswelle koaxialen Spindel des in einer Betriebsstellung stehenden Werkzeughalters bekannt. Bei dieser Kupplungseinrichtung ist auf einen Spindelstummel des Werkzeughalters ein Muffenelement axial verschieblich aufgesetzt, das auf einer Seite einen stegförmigen Mitnehmer trägt, der im gekuppelten Zustand in eine entsprechende Mitnehmernut auf der Antriebswelle eingreift. Das mit dem Spindelstummel drehfest gekuppelte Muffenelement trägt auf seiner Außenseite zwei einander gegenüber liegende Zähne, die in dem mit der Antriebswelle gekuppelten Zustand in einer Umfangsrille des die Spindel umgebenen Schaftes des Werkzeughalters umlaufen und in dem nicht eingekuppelten Zustand in eine an dem Schaft vorgesehene Verzahnung eingreifen. Das auf diese Weise an dem Schaft und nicht unmittelbar an dem Spindelstummel unverlierbar gehaltene Muffenelement weist zwei unterschiedliche Schaltzustände auf, die durch eine Kurvenfläche auf dem Boden der Mitnehmernut der Antriebswelle angesteuert werden und von denen in dem einen das Muffenelement bezüglich des Schaftes und der Spindel in einer vorbestimmten Drehwinkellage fixiert ist und in dem anderen das Muffenelement die Spindel des Werkzeughalters antreibt.

Aus der DE 199 40 330 C2 ist eine Werkzeugspanneinrichtung mit einem ein Werkzeug aufnehmenden Werkzeughalter zum Einsetzen in eine Aufnahme eines Werkzeugträgers bekannt., bei der besondere Maßnahmen vorgesehen sind, die es erlauben, ohne störende oder übermäßig aufwendige Maßnahmen an dem Werkzeugträger und ohne unerwünscht hohen Bedienaufwand eine eng tolerierte Lagefixierung des Werkzeughalters bezüglich des Werkzeugträgers zu gewährleisten. Trotz dieser Maßnahmen hat sich in der Praxis gezeigt, dass insbesondere bei hohen Drehzahlen (über 4000 Umdrehungen pro Minute) der Spindel des Werkzeughalters, wie sie bei Verwendung von Hartmetallwerkzeugen erforderlich sind, Schwingungserscheinungen auftreten können, die sich ungünstig auf die Bearbeitung und die Standzeit der Schneidwerkzeuge auswirken.

Aufgabe der Erfindung ist es deshalb, hier auf einfache, wirkungsvolle Weise abzuhelfen.

Zur Lösung dieser Aufgabe weist die Kupplungseinrichtung gemäß der Erfindung die Merkmale des Patentanspruchs 1 auf und ein Kupplungselement weist die Merkmale des Anspruchs 14 auf.

Die Erfindung geht von der Überlegung aus, dass die im Vorstehenden erläuterten unerwünschten Erscheinungen zu einem erheblichen Teil auf an sich geringe Fluchtungsfehler zwischen der Antriebswelle und der Spindel des Werkzeughalters oder der Spanneinrichtung zurückzuführen sind, die ein verhältnismäßig großes Spiel zwischen dem Mitnehmer und der Mitnehmernut an der Kupplungsstelle zwischen der im Wesentlichen starr gelagerten Antriebswelle der ortsfesten Antriebseinheit und der Spindel des in die jeweilige Arbeitsstellung verbrachten Werkzeughalters erfordern. Erfindungsgemäß ist zwischen den beiden Mitnehmerelementen, d.h. bspw. dem Mitnehmer oder der Mitnehmernut der Antriebswelle und dem Mitnehmerelement der Spindel des jeweiligen Werkzeughalters oder der Spanneinrichtung ein Fluchtungsfehler zwischen der Antriebswelle und der Spindel ausgleichendes, loses Kupplungselement angeordnet, das mit den beiden Mitnehmerelementen formschlüssig gekuppelt ist.

Das an der Antriebswelle oder der Spindel unverlierbar gehaltene Kupplungselement erlaubt es, an der Kupplungsstelle zwischen dem Mitnehmer und der Mitnehmernut ein minimales Spiel (ca. 0,02 mm und weniger) vorzusehen und außerdem trotz den in der Werkzeughalteraufnahme eines Werkzeugträgers, bspw. einer Revolverscheibe vorhandenen beengten Platzverhältnisse Fluchtungsfehler zwischen der Antriebswelle und der jeweils in die Kupplungsschnittstelle eingeschwenkten oder eingefahrenen Spindel des auf dem Werkzeugträger angeordneten Werkzeughalters oder der Spanneinrichtung auszugleichen und unschädlich zu machen.

Zu den hier erwähnten Werkzeughaltern zählen Werkzeughalter mit Zylinderschaft nach DIN 69880, ohne dass die Erfindung darauf beschränkt wäre. Die Erfindung ist auch auf Werkzeughalter mit einem Befestigungsflansch zur Befestigung an einem Werkzeugträger oder, ganz allgemein, auf jede Art von Werkzeughaltern und Werkzeug- und Werkstückspanneinrichtungen anwendbar, die an einem Werkzeugträger angebracht werden können. Zu den Werkzeugträgern im Sinne der Erfindung gehören nicht nur Revolverscheiben und -trommeln, sondern auch linear weiterschaltbare Werkzeugträger, wie sie heute in zunehmendem Maße Verwendung finden. Die erfindungsgemäße Kupplungseinrichtung ist generell für alle Systeme anwendbar, bei denen es darauf ankommt, in beengten Platzverhältnissen kleine Fluchtungsfehler an der Kupplungsstelle zwischen einer Antriebswelle und der Spindel einer Werkzeug- oder Werkstückspanneinrichtung auszugleichen.

Weitere Merkmale und Vorteile der erfindungsgemäßen Kupplungseinrichtung sind Gegenstand von Unteransprüchen.

In der Zeichnung sind Ausführungsbeispiele des Gegenstandes der Erfindung dargestellt: Es zeigen
Fig. 1 eine schematische ausschnittsweise Darstellung einer Drehmaschine mit einem in der X- und Z-Richtung verfahrbaren, um eine Drehachse schaltbaren Werkzeugträger in Gestalt eines Sternrevolvers mit zwei eingesetzten Werkzeughaltern und mit einer zugeordneten ortsfesten Antriebsquelle, die mit der Spindel eines Werkzeughalters durch eine Kupplungseinrichtung gemäß der Erfindung gekuppelt ist;
Fig. 2 die Drehmaschine nach Figur 1 mit ihrem Werkzeugträger im Ausschnitt, unter Veranschaulichung der Kupplungsstelle zwischen der Antriebswelle der Antriebsquelle und der Spindel des in Arbeitsposition befindlichen Werkzeughalters, in einer Seitenansicht und in einem anderen Maßstab;
Fig. 3 eine Drehmaschine ähnlich wie in Figur 1, jedoch mit einem linear verfahrbaren Werkzeugträger, im Ausschnitt und in einer stirnseitigen Draufsicht auf das Werkstück;
Fig. 4 einen Ausschnitt aus dem Werkzeugträger der Drehmaschine nach Figur 1, unter Veranschaulichung der Kupplungsstelle zwischen der Antriebswelle und der Spindel des mit der Antriebsquelle gekuppelten Werkzeughalters, geschnitten längs der Linie IV-IV der Figur 1, in einer Seitenansicht und in einem anderen Maßstab;
Fig. 5 das Kupplungselement der Kupplungseinrichtung nach Figur 1, in perspektivischer Darstellung und in einem anderen Maßstab;
Fig. 6 die Kupplungseinrichtung der Drehmaschine nach Figur 1, in einer Seitenansicht ähnlich Figur 2 und in einem anderen Maßstab;
Fig. 7 das Kupplungselement der Kupplungseinrichtung nach Figur 6, geschnitten längs der Linie VII-VII der Figur 6 in einer Draufsicht;
Fig. 8 die Kupplungseinrichtung der Drehmaschine nach Figur 1 in einer anderen Ausführungsform, in einer Schnittdarstellung entsprechend Figur 6 und in einem anderen Maßstab;
Fig. 9 das Kupplungselement der Kupplungseinrichtung nach Figur 8, geschnitten längs der Linie IX-IX der Figur 8 in einer Draufsicht;
Fig. 10 einen Teilbereich der Kupplungseinrichtung nach Figur 8 in vergrößerter Darstellung;
Fig. 11 das Kupplungselement der Kupplungseinrichtung nach Figur 8, geschnitten längs der Linie XI-XI der Figur 12 in einer Seitenansicht;
Fig. 12 das Kupplungselement der Kupplungseinrichtung nach Figur 8, in einer Draufsicht auf dessen Bohrung bei eingesetztem Sprengring und in einem anderen Maßstab und
Fig. 13 einen Ausschnitt bei "A" des Kupplungselements nach Figur 11 in einer entsprechenden Schnittdarstellung zur Veranschaulichung von Einzelheiten.

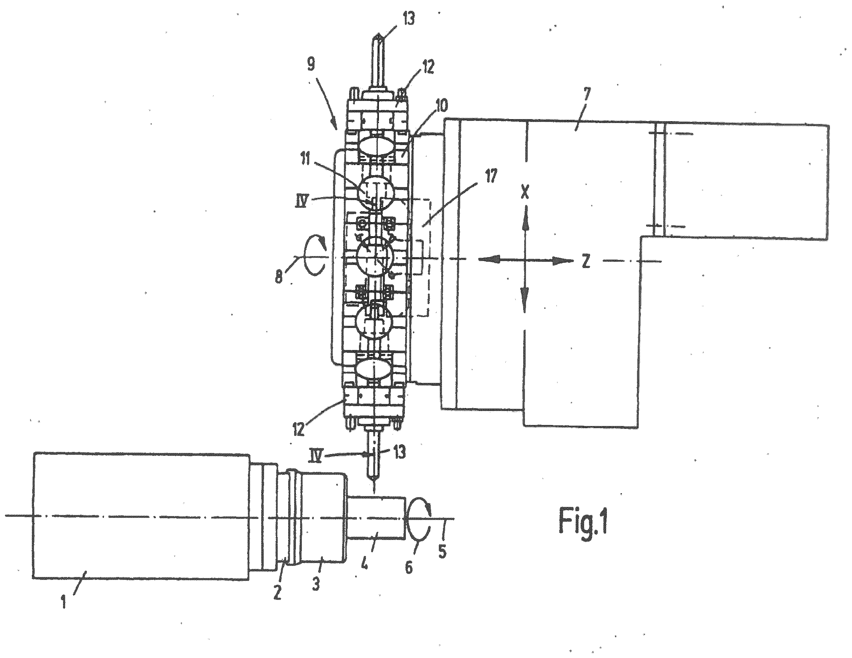

In Figur 1 sind von einer Drehmaschine lediglich einige zum Verständnis der Erfindung dienliche wesentliche Teile schematisch veranschaulicht:

In einem Spindelstock 1 ist eine Arbeitsspindel 2 drehbar gelagert, die ein Spannfutter 3 trägt, in dem ein bearbeitendes Werkstück 4 gespannt ist, das um eine Drehachse 5 in Umdrehung versetzt werden kann, wie dies durch einen Pfeil 6 angedeutet ist.

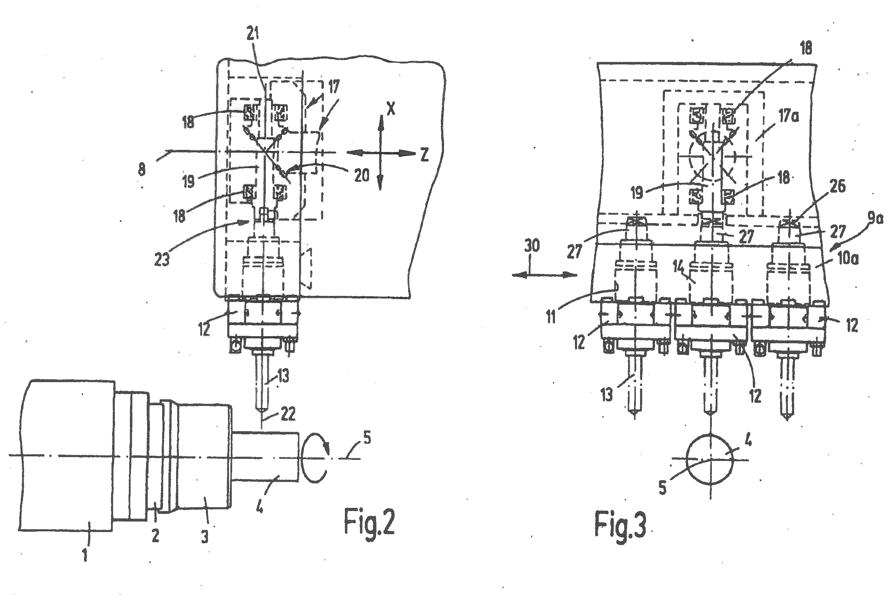

Neben dem Spindelstock 1 ist auf den nicht weiter dargestellten Maschinengestell ein Support 7 angeordnet, der einen um eine Achse 8 verdrehbar gelagerten Werkzeugträger 9 in Gestalt einer Sternrevolverscheibe 10 trägt, die durch den Support in der X- und der Z-Richtung verfahrbar ist. Die Sternrevolverscheibe 10 ist an ihrem Umfang mit gleichmäßig voneinander beabstandeten Aufnahmen 11 ausgebildet, die im Wesentlichen radial zu der Achse 8 verlaufen und die zur Aufnahme von Werkzeughaltern für feststehende oder umlaufende Werkzeuge, von Werkzeug- oder Werkstückspanneinrichtungen und dergleichen dienen. In Figur 2 sind lediglich zwei Werkzeughalter 12 veranschaulicht, die jeweils ein angetriebenes Werkzeug 13 tragen und von denen der dem Werkstück benachbarte, untere Werkzeughalter 12 in der Arbeitsposition steht.

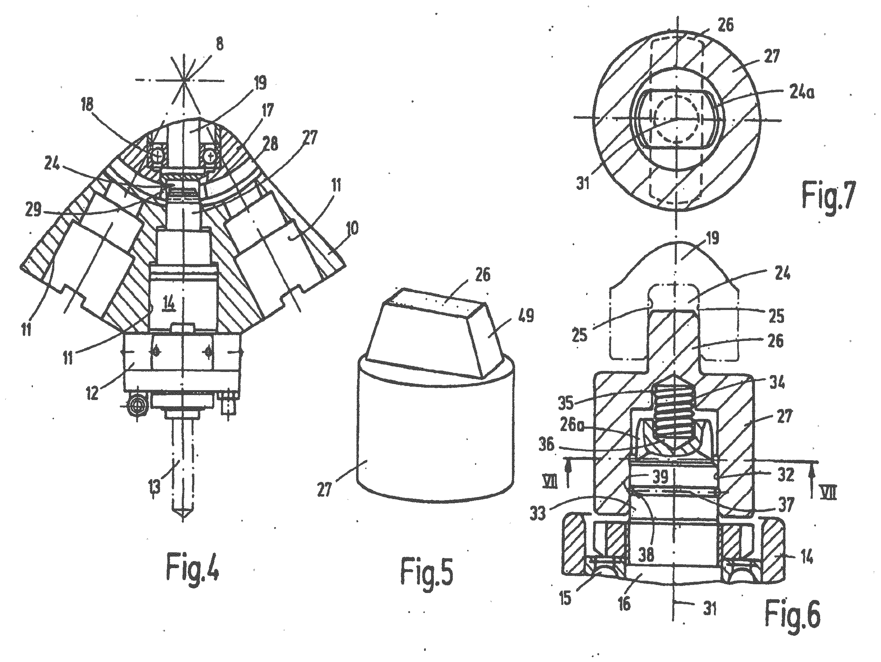

Wie insbesondere aus den Figuren 2 und 4 zu ersehen, weist jeder der Werkzeughalter 12 einen Zylinderschaft 14 auf, mit dem er in die zugeordnete Aufnahme 11 der Sternrevolverscheibe 10 eingesetzt ist, zu der er genau lagerichtig ausgerichtet ist. Wegen der Einzelheiten kann bspw. auf die DE 199 40 330 C2 verwiesen werden. Durch den Zylinderschaft 14 verläuft eine in dem Zylinderschaft 14 mittels Wälzlagern 15 drehbar gelagerte Spindel 16, die über ein in dem Werkzeughalter 12 enthaltenes Getriebe zum Antrieb des Werkzeugs 13 dient.

Die Spindel 16 des in der unteren Arbeitsposition nach Figur 1 stehenden Werkzeughalters 12 ist durch eine ortsfeste Antriebseinheit 17 angetrieben, die zu konzentrisch zu der Achse 8 angeordnet und in Figur 1, 2 gestrichelt schematisch angedeutet ist. Die die Antriebsquelle für die Spindel 16 bildenden Antriebseinheit 17 ist ortsfest und weist eine in Wälzlagern 18 drehbar gelagerten Antriebswelle 19 auf, die durch ein bei 20 angedeutetes Kegelradgetriebe in Umdrehung versetzt werden kann.

Die um ihre Achse 8 drehbar gelagerte Revolverscheibe 10 kann jeweils schrittweise weitergeschaltet werden, derart, dass jeweils eine der Aufnahmen 11 mit dem darin eingesetzten Werkzeughalter 12 in der in Figur 1, 2 unten dargestellten Arbeitsposition positionierbar ist. In dieser Arbeitsposition ist die Achse 21 der Antriebswelle 19 exakt auf die Achse 22 der Spindel 16 des in der Arbeitsposition stehenden Werkzeughalters 12 ausgerichtet, wobei Fluchtungsfehler zwischen den beiden Achsen 21, 22 durch entsprechend Einstellung des Werkzeugträgers 12 weitgehend vermieden sind, wie dies bspw. in der DE 199 40 330 C2 erläutert ist.

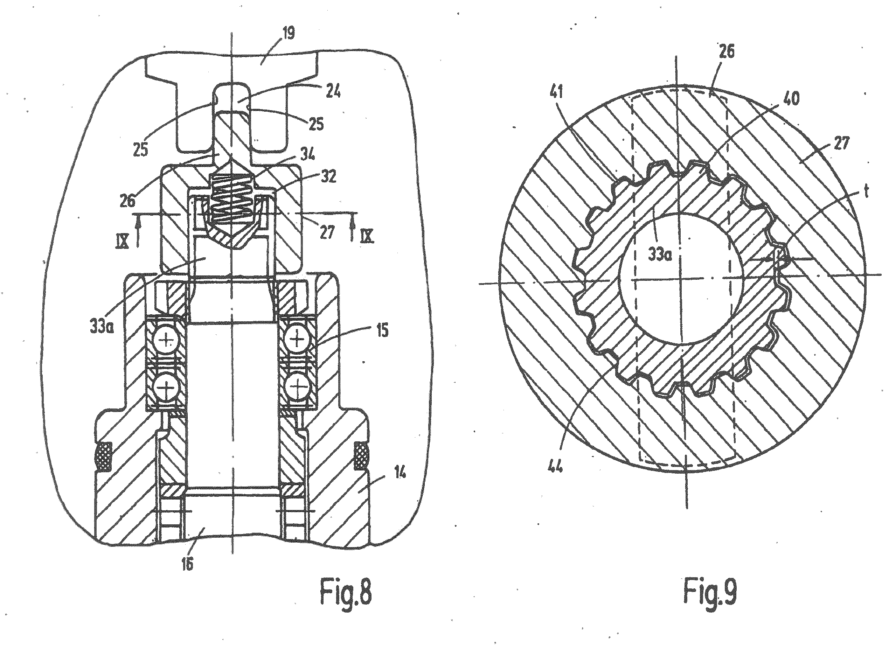

Die Spindel 16 des in der Arbeitsposition stehenden Werkzeughalters 12 ist mit der Antriebswelle 19 der Antriebseinheit 17 formschlüssig gekuppelt, so dass das zur Bearbeitung des Werkstücks 4 erforderliche Drehmoment von der Antriebswelle 19 auf die Spindel 16 schlupflos übertragen wird. Die Kupplung der Antriebswelle 19 mit der Spindel 16 erfolgt über miteinander in Eingriff bringbare komplementäre Mitnehmerelemente an einer Kupplungsstelle 23 in (Figur 2), die radial innerhalb der jeweiligen Aufnahme 11 der Revolverscheibe 10 liegt und deren Einzelheiten insbesondere aus den Figuren 4 bis 7 für eine erste Ausführungsform und aus den Figuren 8 bis 13 für eine zweite Ausführungsform zu ersehen sind:

An ihrem der Kupplungsstelle 23 zugewandtem Ende ist die Antriebswelle 19 mit einer quer verlaufenden Mitnehmernut 24 ausgebildet, die zwei zueinander parallele, ebene Seitenwände 25 aufweist. In die Mitnehmernut 24 kann mit geringem Spiel (ca. 0,02 mm und weniger) ein stegartiger Mitnehmer 26 eines Kupplungselementes 27 eingreifen, das mit der Spindel 16 des Werkzeughalters 12 formschlüssig gekuppelt ist und das in noch zu in erläuternder Weise einen Ausgleich von Fluchtungsfehlern zwischen der Antriebswelle 19 und der Spindel 16 des in der Arbeitsposition befindlichen Werkzeughalters 12 bewirkt.

Im Betrieb ist die Spindel 16 des in der Arbeitsposition stehenden Werkzeughalters 12 über das Kupplungselement 27 formschlüssig drehfest mit der Antriebswelle 19 gekuppelt, in deren Mitnehmernut 24 der stegartige Mitnehmer 26 des Kupplungselementes 27 eingreift, wie dies bspw. in den Figuren 4, 6 veranschaulicht ist. Nach Beendigung des jeweiligen Bearbeitungsvorganges wird die Revolverscheibe 10, wie bereits erwähnt, weitergeschaltet um einen anderen Werkzeughalter mit seinem zugehörigen Werkzeug 13 in die Arbeitsposition zu überführen. Dazu wird zunächst die Antriebswelle 19 der Antriebseinheit 17 in der in Figur 4 dargestellten Winkelstellung zum Stillstand gebracht, in der die Mitnehmernut 24 mit einer ihrer Seitenwandungen 25 exakt auf eine an der ortsfesten Antriebseinheit 17 vorgesehene ringförmige Führungsfläche 28 ausgerichtet ist. Bei der sodann einsetzenden Schaltbewegung der Revolverscheibe 10 läuft der Mitnehmer 26 des Kupplungselementes 27 des Werkzeughalters 12 mit einer Seitenfläche auf die Führungsfläche 28 auf, die ihn im Verlauf der weiteren Schaltbewegung der Revolverscheibe 10, ebenso wie die Mitnehmer 26 anderer in die Aufnahmen 11 eingesetzter Werkzeughalter 12, in exakter Ausrichtung in einer zu der Achse 8 rechtwinkligen, durch die Führungsbahn 28 vorgegebenen Ebene hält. Die Führungsbahn 28 ist bei 29 im Bereiche der Antriebswelle 19 unterbrochen, um das mit der Mitnehmernut 24 versehene Endteil der Antriebswelle 19 aufzunehmen.

Im weiteren Verlauf der Schaltbewegung wird der auf der Führungsbahn 28 lagerichtig gehaltene Mitnehmer 26 des nächstfolgenden Werkzeughalters 12 in die genau auf ihn ausgerichtete Mitnehmernut 24 eingeschoben, bis die Spindelachse 22 und die Antriebswellenachse 21 exakt miteinander fluchten, womit die Revolverscheibe 10 exakt positioniert ist und das Werkzeug 13 des neuen Werkzeughalters 12 angetrieben werden kann.

Die beschriebene Art der Kupplung der Spindel 16 eines Werkzeughalters 12 mit der Antriebswelle 19 über das Kupplungselement 27 ist im Übrigen nicht auf drehbare Werkzeugträger 9, wie die beschriebene Revolverscheibe 10 beschränkt, sondern kann auch bei linear beweglichen Werkzeugträgern Verwendung finden, wie dies in Figur 3 angedeutet ist. Die Antriebseinheit 17a ist ortsfest angeordnet. Die Werkzeughalter 12 sind nebeneinander in entsprechende Aufnahmen 11 eines bspw. schienenförmigen Werkzeugträgers 9a eingesetzt, der, wie durch einen Doppelpfeil 30 angedeutet, linear rechtwinklig zu der Antriebswelle 19 taktweise verfahrbar ist, derart, dass der Mitnehmer 26 jedes der Werkzeughalter 12 in die in Figur 3 in der Mitte dargestellte Arbeitsposition überführbar ist, in der er mit der Antriebswelle 19 formschlüssig gekuppelt ist.

Die Werkzeughalter 12 können außer in der durch den Doppelpfeil 30 angedeuteten Y-Richtung, ähnlich wie in Figur 2, mit einem Schlitten 10a des Werkzeugträges 9a in der X- und Z-Richtung bewegt werden.

Die Figuren 5 bis 7 veranschaulichen eine erste Ausführungsform der Elemente der bspw. in Figur 4 dargestellten erfindungsgemäßen Kupplungseinrichtung zwischen der Antriebswelle 19 und der Spindel 16 des Werkzeughalters 12. Wie aus Figur 5 zu entnehmen, ist das Kupplungselement ein Teil mit einem im Wesentlichen zylindrischen oder kegelförmigen Körper, der auf einer Stirnseite den stegartigen Mitnehmern 26 trägt, der symmetrisch zu der Mittellängsachse 31 (Figur 6,7) angeordnet ist. Das Kupplungselement 27 besteht in der Regel aus Stahl; es kann aber grundsätzlich auch aus anderen Materialien hergestellt sein, die den Beanspruchungen bei der Drehmomentübertragung gewachsen sind. Auch kann es eine polygonale oder sonst wie gestaltete Querschnittsgestalt aufweisen. Ausgehend von der dem Mitnehmer 26 gegenüberliegenden Stirnseite ist in dem Kupplungselement 27 eine zu der Achse 31 koaxiale Bohrung 32 vorhanden, deren Durchmesser jenem eines endseitigen zylindrischen Zapfens 33 der Spindel 16 entspricht, wobei jedoch zwischen der Bohrung 32 und dem Spindelzapfen 33 ein gewisses vorbestimmtes radiales Spiel vorhanden ist. In den Grund der Bohrung 32 ist eine Mitnehmernut 24a eingearbeitet, die parallelflankig begrenzt ist und sich zu dem Spindelzapfen 33 hin öffnet. In die Mitnehmernut 24a greift ein an dem Spindelzapfen 33 angeformter, zu der Achse 31 symmetrischer, stegartiger Mitnehmer 26a ein, der im Prinzip ähnlich dem Mitnehmer 26 auf der äußeren Stirnfläche des Kupplungselementes 27 gestaltet ist. Der Mitnehmer 26a greift in die Mitnehmernut 24a mit geringem vorbestimmtem Spiel ein. Wie insbesondere aus Figur 7 zu entnehmen, sind der Mitnehmer 26 und die Mitnehmernut 26a des Kupplungselementes 27 um 90° gegeneinander verdreht, so dass sich eine kardanische Anordnung zwischen der Spindel 16 und der Antriebswelle 19 ergibt. Zwischen dem Kupplungselement 27 und dem Spindelzapfen 33 ist eine Druckfeder 34 angeordnet, die auf ihren beiden Seiten in Federaufnahme- oder -führungsbohrungen 35 auf dem Boden der Mitnehmernut 24a bzw. 36 in der Stirnfläche des Mitnehmer 26a abgestützt ist. Die Druckfeder 34 ist bestrebt, das Kupplungselement 26 von dem Spindelzapfen 33 weg zu drücken.

Das Kupplungselement 27 ist auf dem Spindelzapfen 33 unverlierbar gehalten. Zu diesem Zwecke ist in den Spindelzapfen 33 eine Umfangsnut 37 eingearbeitet, in der ein radial nach außen zu vorgespannter, im Querschnitt kreisrunder Sprengring 38 liegt, der gleichzeitig in eine Umfangsnut 39 an der Innenwand der Bohrung 32 eingreift und so das Kupplungselement 27 auf dem Spindelzapfen 33 unverlierbar festhält.

Wegen des vorbestimmten Spiels des Sprengrings 38 in den Umfangsnuten 37, 39 und des Spiels zwischen der Innenwand der Bohrung 32 und der Außenumfangsfläche des Spindelzapfens 33 kann das an sich lose, d.h. bezüglich der Antriebswelle 19 und der Spindel 16 begrenzt bewegliche Kupplungselement 27 bei der Drehbewegung Fluchtungsfehler zwischen der Antriebswelle 19 und der Spindel 16 ausgleichen. Die Druckfeder 34 spannt das Kupplungselement 27 axial gegen den Spindelzapfen 33 vor und stabilisiert damit das Kupplungselement 27 elastisch bezüglich des Spindelzapfens 16. Gleichzeitig bewirkt die Druckfeder 34, zusammen mit der geringfügigen radialen Beweglichkeit des Kupplungselementes 27 bezüglich des Spindelzapfens 33, dass während des Positioniervorgangs des Werkzeugträgers 9, 9a der Mitnehmer 26 mit einer seiner Flachseiten unter einer gewissen Federvorspannung an der Führungsfläche 28 (Figur 4) angedrückt gehalten ist. Damit kann ein minimales Spiel zwischen dem Mitnehmer 26 und der Mitnehmernut 24 verwendet werden, weil sichergestellt ist, dass der Mitnehmer 26 beim Einfahren in die Mitnehmernut 24 einwandfrei mit dieser fluchtend ausgerichtet gehalten ist.

Bei dem anhand der Figuren 6, 7 beschriebenen Ausführungsbeispiel bilden die Mitnehmernut 24 und der Mitnehmer 26 des Kupplungselementes 27 erste, miteinander in Eingriff stehende komplementäre Kupplungselemente, während durch die Mitnehmernut 24a des Kupplungselementes 27 und den Mitnehmer 26a des Spindelzapfens 33 zweite Mitnehmerelemente gebildet sind, die im Wesentlichen gleich wie die ersten Mitnehmerelemente gestaltet sind. Die zweiten Mitnehmerelemente 24a, 26a können grundsätzlich aber auch unterschiedlich von den ersten Mitnehmerelementen 24, 26 gestaltet sein; sie müssen lediglich eine formschlüssige Kupplung zwischen dem Kupplungselement 27 und der Spindel 16 mit der im Vorstehenden geschilderten, Fluchtungsfehler ausgleichenden Wirkung herstellen. So wäre es z.B. denkbar, den Spindelzapfen 33 im Querschnitt polygonal und die Bohrung 32 entsprechend polygonartig auszubilden.

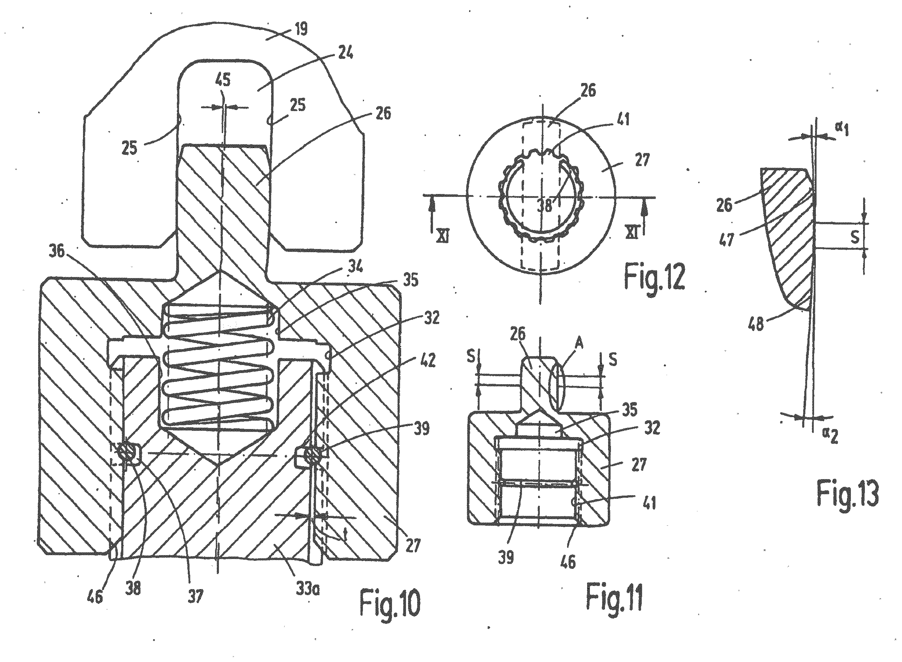

Eine andere solche Ausbildung der zweiten Mitnehmerelemente ist in den Figuren 8 bis 13 veranschaulicht: Auf dem zylindrischen Spindelzapfen 33a ist außen eine achsparallele Keilverzahnung 40 vorgesehen, deren Zähne beispielhaft eine im Wesentlichen trapezförmige Querschnittsgestalt aufweisen und die in eine entsprechende achsparallele Keilverzahnung 41 eingreift, welche auf der Innenwand der Bohrung 32 des Kupplungselementes 27 ausgebildet ist. Am Innendruchmesser des Zahnnabenprofils der Keilverzahnung 41 ist die Ringnut 39 angebracht, in die der Sprengring 38 eingreift, der gleichzeitig auch in die Umfangsnut 37 des Spindelzapfens 33a eingreift und damit das Kupplungselement 27 unverlierbar auf dem Spindelzapfen 33a hält. Wie insbesondere aus der vergrößerten Darstellung nach Figur 10 zu ersehen, wird das Kupplungselement 27 von der Druckfeder 34 in Richtung der Mitnehmernut 24 gedrückt, wobei der Sprengring 38 gegen eine radiale Planfläche 42 der Umfangsnut 37 angepresst wird. Die Umfangsnut 37 hat eine größere Weite als dem Durchmesser des Sprengrings 38 entspricht, so dass das Kupplungselement 27 gegen die Vorspannung der Feder 34 eine begrenzte axiale Beweglichkeit gegenüber dem Spindelzapfen 33a aufweist, wie dies in gleicher Weise bei dem Ausführungsbeispiel nach den Figuren 6, 7 der Fall ist. Der Sprengring 38 ist wiederum radial nach außen unter Vorspannung gehalten und durch die Umfangsnut 39 radial fixiert, so dass er sich durch Fliehkräfte während des Betriebs nicht öffnen kann.

Zwischen den beiden miteinander in Eingriff stehenden Keilverzahnungen 40, 41 ist einbestimmtes Verzahnungsspiel "t" vorhanden, das in den Figuren 9, 10 zur besseren Verdeutlichung vergrößert dargestellt ist.

Bei der Übertragung eines Drehmomentes von der Antriebswelle 19 auf die Spindel 16 tritt je nach Drehrichtung eine einseitige Anlage von Flanken der Verzahnung 40 an Zahnflanken 44 der Verzahnung 41 auf. Diese einseitige Anlage der Zahnflanken bewirkt eine Selbstzentrierung des Kupplungselementes 27 und wirkt einer Auslenkung des Kupplungselementes 27 aus der gemeinsamen Achsmittellage entgegen. Der maximale Achsversatz bzw. die radiale Auslenkung ist dabei durch das vorgegebene Verzahnungsspiel t begrenzt. Figur 9 zeigt eine Auslenkung des Kupplungselementes 27 zu dem Spindelzapfen 33a quer zu dem Mitnehmer 26, der in dieser Richtung wegen des minimierten Spiels in der Kupplungsnut 24 sonst nicht genügend ausweichen könnte, um einen Fluchtungsfehler auszugleichen.

Da, wie aus Figur 10 hervorgeht und bereits erläutert wurde, die Umfangsnut 37 sowohl radial tiefer als auch axial breiter ist als der Sprengring 38 wird eine Lage- bzw. Winkelveränderung des Kupplungselementes 27 innerhalb des vorgegebenen Verzahnungsspiels t nicht behindert, so dass ein in Figur 10 bei 45 angedeuteter Achsversatz der Achse 21 der Antriebswelle 19 gegenüber der Spindelachse 22 quer zu dem Mitnehmer 26 innerhalb des Verzahnungsspiels t möglich ist und somit der Mitnehmer 26 mit minimalen Spiel in der Mitnehmernut 24 unter Ausgleich der Fluchtungsfehler arbeiten kann. Die Verzahnungen 40, 41 gestatten eine einfache Montage des Kupplungselementes auf dem Spindelzapfen 33a, die durch eine konische Ringfläche 46 am Rand der Bohrung 32 des Kupplungselementes 27 noch zusätzlich erleichtert wird.

Der Mitnehmer 26 ist bei beiden erläuterten Ausführungsformen in der aus den Figuren 11, 13 ersichtlichen Weise gestaltet. Insbesondere Figur 13 zeigt, dass der Mitnehmer auf seinen beiden einander gegenüberliegenden Seitenflächen nur in einem Teilbereich "s" parallel zu der anliegenden Seitenwand 25 der Mitnehmernut 24 ausgebildet ist. Die an den Teilbereich s anschließenden Anfangs- und Endbereiche 47, 48 sind um einen Winkel α1 bzw. α2 frei geformt, damit der Mitnehmer 26 quer zu der Mitnehmernut 24 im Winkel etwas ausweichen, d.h. eine geringe, begrenzte Kippbewegung ausführen kann.

Das gleiche Ergebnis ließe sich auch durch eine entsprechende Profilgestalt der Seitenwände 25 der Mitnehmernut 24 erzielen.

Während bei den geschilderten Ausführungsbeispielen der neuen Kupplungseinrichtung die Kupplungsnut 24 an der Antriebswelle 19 vorgesehen ist, während das Kupplungselement 27 den entsprechenden komplementären Mitnehmer 26 trägt, könnte die Anordnung auch umgekehrt getroffen sein, d.h., dass der Mitnehmer 26 an der Antriebswelle 19 und die Mitnehmernut 24 an dem Kupplungselement 27 ausgebildet sind.

Schließlich ist noch zu erwähnen, dass der stegartige Mitnehmer 26, abweichend von der Ausführungsform nach Figur 5, anstelle der seitlichen Anschrägungen 49 auch abgerundet oder in einer sonst wie das Einfahren in die Mitnehmernut 24 erleichternden Weise gestaltet sein könnte, was auch für die Ausbildung seiner Ränder insgesamt gilt.

Grundsätzlich wäre es auch denkbar, dass das an sich lose Kupplungselement 27 nicht an der Spindel 16, d.h. dem Spindelzapfen 33 bzw. 33a, sondern, bei entsprechender Gestaltung der Mitnehmerelemente, an der Antriebswelle 19 unverlierbar gehalten ist.

## Patentansprüche

1. Kupplungseinrichtung mit einer Spindel (16) und einem Kupplungselement (27) für Werkzeughalter oder Werkzeug- oder -stückspanneinrichtungen zur lösbaren formschlüssigen Kupplung einer Antriebswelle (19) einer zugeordneten Antriebsquelle (17) mit der zu der Antriebwelle koaxialen Spindel (16) des Werkzeughalters (12) oder der Spanneinrichtung, bei der:
Die Antriebswelle (19) und die Spindel (16) getrennte Mitnehmerelemente (24;26a,40) tragen, die eine quer zu der Antriebswelle (19) oder der Spindel (16) verlaufende Mitnehmernut (24) oder einen stegförmigen Mitnehmer (26;26a) aufweisen,
zwischen den beiden Mitnehmerelementen das Fluchtungsfehler zwischen der Antriebswelle und der Spindel ausgleichende, im Betrieb bezüglich der Antriebswelle und der Spindel begrenzt bewegliche Kupplungselement (27) angeordnet ist, das mit dem Mitnehmerelement der Antriebswelle oder der Spindel formschlüssig gekuppelt und mit dem Mitnehmerelement der Spindel bzw. der Antriebswelle formschlüssig kuppelbar ist, wobei
das Kupplungselement (27) auf einer Stirnseite einen jeweils mit geringem Spiel in die Mitnehmernut (24) eingreifenden stegförmigen Mitnehmer (26) bzw. eine einen stegförmigen Mitnehmer aufnehmende Mitnehmernut trägt und auf seiner eine zu seiner Längsachse koaxiale Bohrung (32) aufweist, die zur Aufnahme und formschlüssigen Mitnahme eines entsprechend gestalteten zapfenförmigen Mitnehmerelementes (33;33a) an der Spindel (16) oder der Antriebswelle (19) eingerichtet ist und das Kupplungselement (27) auf der Spindel (16) oder der Antriebswelle mit einem vorbestimmten radialen Spiel zwischen der Innenwandung der Bohrung und der Außenumfangsfläche des zapfenförmigen Mitnehmerelements (33;33a)und einer begrenzten axialen Beweglichkeit an der Spindel oder der Antriebswelle lose und unverlierbar gehalten ist,
wobei das Kupplungselement (27) an der Spindel (16) oder der Antriebswelle (19) mittels eines an der Innenwand der Bohrung (32) formschlüssig angreifenden, radial federnd aufweitbaren Verriegelungselementes (38) unverlierbar gehalten ist und
das Verriegelungselement ein federelastischer Sprengring (38) ist, der unter Ermöglichung einer begrenzten axialen Beweglichkeit des Kupplungselementes (27) gegenüber der Antriebswelle (14) oder der Spindel (16) in entsprechende Verriegelungsnuten (37,39) an dem zapfenförmigen Mitnehmerelement (33,33a) und der Innenwand der Bohrung (32) des Kupplungselementes (27) eingreift.

2. Kupplungseinrichtung nach Anspruch 1, **dadurch gekennzeichnet, dass** das Kupplungselement (27) auf einer Stirnseite einen stegförmigen Mitnehmer (26) oder eine Mitnehmernut trägt und die Bohrung (32) auf ihrem Grund eine Mitnehmernut (24a) aufweist, die um 90° gegenüber dem stegförmigen Mitnehmer (26) oder der Mitnehmernut auf der einen Stirnseite verdreht angeordnet ist.

3. Kupplungseinrichtung nach Anspruch 1, **dadurch gekennzeichnet, dass** die Bohrung (32) mit einer achsparallelen Keilverzahnung (41) ausgebildet ist und dass das zapfenförmige Mitnehmerelement (33a) eine entsprechende Keilverzahnung (40) trägt.

4. Kupplungseinrichtung nach Anspruch 1, **dadurch gekennzeichnet, dass** die Bohrung (32) ein polygonales Querschnittsprofil aufweist und dass das zapfenförmige Mitnehmerelement im Querschnitt entsprechend polygonförmig gestaltet ist.

5. Kupplungseinrichtung nach Anspruch 1, **dadurch gekennzeichnet, dass** das Kupplungselement (27) gegen die Antriebswelle (19) oder die Spindel (16) axial federnd vorgespannt ist.

6. Kupplungseinrichtung nach Anspruch 5, **dadurch gekennzeichnet, dass** in die axiale Bohrung (32) des Kupplungselements (27) Federmittel (34) eingesetzt sind, durch die das Kupplungselement (27) in Achsrichtung elastisch vorspannbar ist.

7. Kupplungseinrichtung nach Anspruch 6, **dadurch gekennzeichnet, dass** die Federmittel eine zu der Bohrungsachse koaxiale Druckfeder (34) aufweisen, die auf wenigstens einer Seite in einer Führungsbohrung (35,36) des Kupplungselementes (27) oder des zapfenförmigen Mitnehmerelementes (33,33a) geführt ist.

8. Kupplungseinrichtung nach Anspruch 6, **dadurch gekennzeichnet, dass** das gegenüber dem zapfenförmigen Mitnehmerelement (33,33a) radial und axial begrenzt bewegliche Kupplungselement durch die Federmittel (34) gegen das Verriegelungselement (38) axial vorgespannt ist

9. Kupplungseinrichtung nach Anspruch 1, **dadurch gekennzeichnet, dass** der stegförmige Mitnehmer (26) und/oder die mit diesem zusammenwirkenden Seitenwände (25) der Mitnehmernut (24) eine begrenzte geringe Kippbewegung des Mitnehmers (26) und der Mitnehmernut (24) relativ zueinander gestattende Gestaltung aufweisen.

10. Kupplungseinrichtung nach Anspruch 9, **dadurch gekennzeichnet, dass** bei parallelflankig ausgebildeter Mitnehmernut (24) der stegförmige Mitnehmer ein im Querschnitt polygonales oder balliges Querschnittsprofil (47,s,48) aufweist.

11. Kupplungseinrichtung nach einem der vorhergehenden Ansprüche, **dadurch gekennzeichnet, dass** der Werkzeughalter (12) und/oder die Werkstückspanneinrichtung zum Einsatz in eine entsprechende Aufnahme (11) eines Werkzeug- und/oder Werkstückträgers (9) eingerichtet sind, in dem die jeweilige Antriebswelle (19) in fester Zuordnung zu wenigstens einer Aufnahme (11) drehbar gelagert ist.

12. Kupplungseinrichtung nach Anspruch 11, **dadurch gekennzeichnet, dass** der Werkzeugträger (9,10a) um eine Achse (8) drehbar oder längs einer vorgegebenen Bahn verstellbar gelagert ist.

13. Kupplungseinrichtung nach Anspruch 12, **dadurch gekennzeichnet, dass** der Werkzeugträger (12) jeweils in einer vorbestimmten Stellung bezüglich der Achse (8) bzw. auf seiner Bewegungsbahn positionierbar ausgebildet ist.

14. Kupplungselement zur Verwendung bei einer Kupplungseinrichtung nach einem der vorhergehenden Ansprüche, **dadurch gekennzeichnet, dass** es einen länglichen Körper aufweist, der auf einer Stirnseite mit einem ersten Mitnehmerelement (26;24) und auf seiner gegenüberliegenden Stirnseite mit einem zweiten Mitnehmerelement (24a;41) ausgebildet ist und dessen Mitnehmerelemente zur formschlüssigen Kupplung mit komplementären Mitnehmerelementen an einer Spindel (16) eines Werkzeugträgers (12) oder einer Werkzeug- oder -stück- Spanneinrichtung bzw. einer Antriebswelle (19) einer Antriebsquelle (17) eingerichtet sind, wobei es auf der einen Seite einen stegförmigen Mitnehmer (26) oder eine Mitnehmernut (24) und auf der gegenüber liegenden Stirnseite eine koaxiale Bohrung (32) aufweist, die zur formschlüssigen Kupplung mit einem komplementären Kupplungselement an der Spindel (16) oder der Antriebswelle (19) eingerichtet ist und der Körper an der Innenwandung der Bohrung (32) eine Verriegelungsnut (39) aufweist, die zur Aufnahme eines radial aufweitbaren Verriegelungselementes eingerichtet ist.

15. Kupplungselement nach Anspruch 14, **dadurch gekennzeichnet, dass** die Bohrung eine achsparallele Keilverzahnung (41) enthält.

16. Kupplungselement nach Anspruch 14, **dadurch gekennzeichnet, dass** die Bohrung (32) auf ihrem Grund eine Mitnehmernut (24a) aufweist, die um 90° gegenüber dem stegförmigen Mitnehmer (26) auf der einen Stirnseite verdreht angeordnet ist

## Claims

1. Coupling device with a spindle (16) and a coupling element (27) for a tool holder or tool or workpiece clamps, for releasable form-fit coupling of a drive shaft (19) of an assigned drive source (17) to the spindle (16), coaxial to the drive shaft, of the tool holder (12) or clamp, in which:
the drive shaft (19) and the spindle (16) carry separate carrier elements (24; 26a, 40) which have a carrier groove (24) running transversely to the drive shaft (19) or spindle (16), or a web-like carrier (26; 26a),
a coupling element (27) is arranged between the two carrier elements, which compensates for the misalignment between the drive shaft and the spindle, and which has limited movability in operation with respect to the drive shaft and the spindle, and which is coupled to the carrier element of the drive shaft or spindle by form fit and is couplable to the carrier element of the spindle or drive shaft by form fit, wherein
on one end face, the coupling element (27) carries a web-like carrier (26) engaging with slight play in the carrier groove (24), or a carrier groove receiving a web-like carrier, and on its other side has a bore (32) coaxial to its longitudinal axis, which is configured for receiving and carrying by form fit a correspondingly designed peg-like carrier element (33; 33a) on the spindle (16) or drive shaft (19), and the coupling element (27) is held loosely and captively on the spindle (16) or drive shaft with a predefined radial play between the inner wall of the bore and the outer circumferential face of the peg-like carrier element (33; 33a) and a limited axial movability on the spindle or drive shaft,
wherein the coupling element (27) is held captively on the spindle (16) or drive shaft (19) by means of a locking element (38) which acts by form fit on the inner wall of the bore (32) and is widenable radially in sprung fashion, and
the locking element is a sprung elastic retaining ring (38) which engages in corresponding locking grooves (37, 39) on the peg-like carrier element (33, 33a) and the inner wall of the bore (32) of the coupling element (27), allowing a limited axial movability of the coupling element (27) with respect to the drive shaft (14) or spindle (16).

2. Coupling device according to claim 1, **characterised in that** on one end face, the coupling element (27) carries a web-like carrier (26) or a carrier groove, and the bore (32) on its base has a carrier groove (24a) which is twisted by 90° with respect to the web-like carrier (26) or carrier groove on the one end face.

3. Coupling device according to claim 1, **characterised in that** the bore (32) is formed with an axially parallel wedge toothing (41), and the peg-like carrier element (33a) carries a corresponding wedge toothing (40).

4. Coupling device according to claim 1, **characterised in that** the bore (32) has a polygonal cross-sectional profile, and the peg-like carrier element is designed correspondingly polygonal in cross-section.

5. Coupling device according to claim 1, **characterised in that** the coupling element (27) is axially preloaded in sprung fashion against the drive shaft (19) or the spindle (16).

6. Coupling device according to claim 5, **characterised in that** spring means (34), which can elastically preload the coupling element (27) in the axial direction, are inserted in the axial bore (32) of the coupling element (27).

7. Coupling device according to claim 6, **characterised in that** the spring means comprise a compression spring (34) coaxial to the bore axis, which is guided on at least one side in a guide bore (35, 36) of the coupling element (27) or the peg-like carrier element (33, 33a).

8. Coupling device according to claim 6, **characterised in that** the coupling element, which is limitedly movable radially and axially with respect to the peg-like carrier element (33, 33a), is axially preloaded by the spring means (34) against the locking element (38).

9. Coupling device according to claim 1, **characterised in that** the web-like carrier (26) and/or the side walls (25) of the carrier groove (24) cooperating therewith has/have a design allowing a limited, slight tilt movement of the carrier (26) and the carrier groove (24) relative to one another.

10. Coupling device according to claim 9, **characterised in that** if the carrier groove (24) is designed with parallel flanks, the web-like carrier has a polygonal or ball-shaped cross-sectional profile (47, s, 48).

11. Coupling device according to any of the preceding claims, **characterised in that** the tool holder (12) and/or the workpiece clamp is/are configured for use in a corresponding receiver (11) of a tool and/or workpiece carrier (9), in which the respective drive shaft (19) is rotatably mounted in fixed allocation to at least one receiver (11).

12. Coupling device according to claim 11, **characterised in that** the tool carrier (9, 10a) is mounted so as to be rotatable about an axis (8) or movable along a predefined track.

13. Coupling device according to claim 12, **characterised in that** the tool carrier (12) is configured so as to be positionable in a respective predefined attitude with respect to the axis (8) or on its movement track.

14. Coupling element for use in a coupling device according to any of the preceding claims, **characterised in that** it has an elongate body which is configured with a first carrier element (26; 24) on one end face and with a second carrier element (24a; 41) on its opposite end face, and the carrier elements of which are designed for form-fit coupling with complementary carrier elements on a spindle (16) of a tool carrier (12) or a tool or workpiece clamp or on a drive shaft (19) of a drive source (17), wherein on the one side it has a web-like carrier (26) or carrier groove (24), and on the opposite side a coaxial bore (32) which is designed for form-fit coupling with a complementary coupling element on the spindle (16) or drive shaft (19), and on the inner wall of the bore (32), the body has a locking groove (39) which is designed to receive a radially widenable locking element.

15. Coupling element according to claim 14, **characterised in that** the bore contains an axially parallel wedge toothing (41).

16. Coupling element according to claim 14, **characterised in that** on its base, the bore (32) has a carrier groove (24a) which is arranged twisted through 90° with respect to the web-like carrier (26) on the one end face.

## Revendications

1. Dispositif d'accouplement, comprenant une broche (16) et un élément d'accouplement (27) pour des porte-outils ou des dispositifs de serrage d'outil ou de pièce à usiner, pour l'accouplement mécanique libérable d'un arbre d"entraînement (19) d'une source d'entraînement (17) associée, avec la broche (16) du porte-outil (12) ou du dispositif de serrage qui est coaxiale avec l'arbre d'entraînement, dans lequel
l'arbre d'entraînement (19) et la broche (16) portent des éléments entraîneurs (24; 26a, 40) séparés qui présentent une rainure d'entraînement (24), s'étendant transversalement à l'arbre d'entraînement (19) ou à la broche (16), ou un entraîneur (26 ; 26a) en forme de tenon,
l'élément d'accouplement (27), qui compense des défauts d'alignement entre l'arbre d'entraînement et la broche et qui, lors du fonctionnement, peut être déplacé de façon limitée par rapport à l'arbre d'entraînement et la broche, est disposé entre les deux éléments entraîneurs et est accouplé mécaniquement avec l'élément entraîneur de l'arbre d'entraînement ou de la broche et peut être accouplé mécaniquement avec l'élément entraîneur de la broche ou de l'arbre d'entraînement, sachant que
l'élément d'accouplement (27) porte sur une face frontale un entraîneur (26) en forme de tenon, s'engageant avec faible jeu dans la rainure d'entraînement (24), ou une rainure d'entraînement accueillant un entraîneur en forme de tenon, et présente sur son autre face un alésage (32) qui est coaxial avec son axe longitudinal et est conçu pour recevoir et entraîner mécaniquement un élément entraîneur (33, 33a) ayant une forme de doigt appropriée, prévu sur la broche (16) ou l'arbre d'entraînement (19), et l'élément d'accouplement (27) est tenu de manière libre et imperdable sur la broche (16) ou l'arbre d'entraînement, avec un jeu radial prédéterminé entre la paroi intérieure de l'alésage et la surface périphérique extérieure de l'élément entraîneur (33 ; 33a) en forme de doigt, et avec une mobilité axiale limitée sur la broche ou l'arbre d'entraînement,
sachant que l'élément d'accouplement (27) est tenu de manière imperdable sur la broche (16) ou l'arbre d'entraînement (19) au moyen d'un élément de verrouillage (38) pouvant être élargi radialement de façon élastique, qui est en prise mécanique avec la paroi intérieure de l'alésage (32), et que
l'élément de verrouillage est une bague d'arrêt (38) ayant l'élasticité d'un ressort, qui s'engage dans des rainures de verrouillage (37, 39) correspondantes de l'élément entraîneur (33, 33a) en forme de doigt et de la paroi intérieure de l'alésage (32) de l'élément d'accouplement (27), en autorisant un déplacement axial limité de l'élément d'accouplement (27) par rapport à l'arbre d'entraînement (19) ou la broche (16).

2. Dispositif d'accouplement selon la revendication 1, **caractérisé en ce que** l'élément d'accouplement (27) porte sur une face frontale un entraîneur (26) en forme de tenon ou une rainure d'entraînement, et l'alésage (32) présente sur son fond une rainure d'entraînement (24a) qui est disposée en étant tournée de 90° par rapport à l'entraîneur (26) en forme de tenon ou la rainure d'entraînement sur l'une des faces frontales.

3. Dispositif d'accouplement selon la revendication 1, **caractérisé en ce que** l'alésage (32) est réalisé avec une denture cannelée (41) parallèle à l'axe, et **en ce que** l'élément entraîneur (33a) en forme de doigt porte une denture cannelée (40) conjuguée.

4. Dispositif d'accouplement selon la revendication 1, **caractérisé en ce que** l'alésage (32) présente un profil transversal polygonal, et **en ce que** l'élément entraîneur en forme de doigt est réalisé avec une section transversale polygonale correspondante.

5. Dispositif d'accouplement selon la revendication 1, **caractérisé en ce que** l'élément d'accouplement (27) est mis sous précontrainte axiale élastique contre l'arbre d'entraînement (19) ou la broche (16).

6. Dispositif d'accouplement selon la revendication 5, **caractérisé en ce que** des moyens faisant ressort (34) sont montés dans l'alésage (32) axial de l'élément d'accouplement (27), qui permettent d'exercer une précontrainte élastique dans la direction axiale sur l'élément d'accouplement (27).

7. Dispositif d'accouplement selon la revendication 6, **caractérisé en ce que** les moyens faisant ressort présentent un ressort de pression (34) qui est coaxial avec l'axe de l'alésage et est guidé sur au moins un côté dans un trou de guidage (35, 36) de l'élément d'accouplement (27) ou de l'élément entraîneur (33, 33a) en forme de doigt.

8. Dispositif d'accouplement selon la revendication 6, **caractérisé en ce que** l'élément d'accouplement, qui peut être déplacé de façon limitée dans les sens radial et axial par rapport à l'élément entraîneur (33, 33a) en forme de doigt, est mis sous précontrainte axiale contre l'élément de verrouillage (38) par les moyens faisant ressort (34).

9. Dispositif d'accouplement selon la revendication 1, **caractérisé en ce que** l'entraîneur (26) en forme de tenon et/ou les parois latérales (25) de la rainure d'entraînement (24) qui coopèrent avec lui présentent une conformation permettant un léger mouvement basculant limité de l'entraîneur (26) et de la rainure d'entraînement (24), l'un par rapport à l'autre.

10. Dispositif d'accouplement selon la revendication 9, **caractérisé en ce que** lorsque la rainure d'entraînement (24) est réalisée avec des flancs parallèles, l'entraîneur en forme de tenon présente un profil transversal (47, s, 48) polygonal ou bombé.

11. Dispositif d'accouplement selon l'une des revendications précédentes, **caractérisé en ce que** le porte-outil (12) et/ou le dispositif de serrage de pièce à usiner sont conçus pour être montés dans un logement (11) correspondant d'un porte-outil et/ou porte-pièce (9), dans lequel l'arbre d'entraînement (19) respectif est monté tournant en étant associé de manière fixe à au moins un logement (11).

12. Dispositif d'accouplement selon la revendication 11, **caractérisé en ce que** le porte-outil (9, 10a) est monté tournant autour d'un axe (8) ou avec possibilité de déplacement le long d'une trajectoire prédéfinie.

13. Dispositif d'accouplement selon la revendication 12, **caractérisé en ce que** le porte-outil (12) est conçu de manière à pouvoir être placé respectivement dans une position prédéfinie par rapport à l'axe (8) ou sur sa trajectoire.

14. Élément d'accouplement destiné à être utilisé dans un dispositif d'accouplement selon l'une des revendications précédentes, **caractérisé en ce qu'**il présente un corps allongé qui est réalisé, sur une face frontale, avec un premier élément entraîneur (26; 24) et, sur sa face frontale opposée, avec un deuxième élément entraîneur (24a; 41), et dont les éléments entraîneurs sont conçus en vue de l'accouplement mécanique avec des éléments entraîneurs complémentaires prévus sur une broche (16) d'un porte-outil (12) ou un dispositif de serrage d'outil ou de pièce à usiner, respectivement un arbre d'entraînement (19) d'une source d'entraînement (17), ledit élément présentant, sur une face, un entraîneur (26) en forme de tenon ou une rainure d'entraînement (24) et, sur la face frontale opposée, un alésage (32) coaxial qui est conçu en vue de l'accouplement mécanique avec un élément d'accouplement complémentaire sur la broche (16) ou l'arbre d'entraînement (19), et le corps présentant sur la paroi intérieure de l'alésage (32) une rainure de verrouillage (39) qui est conçue pour accueillir un élément de verrouillage pouvant être élargi dans le sens radial.

15. Élément d'accouplement selon la revendication 14, **caractérisé en ce que** l'alésage comporte une denture cannelée (41) parallèle à l'axe.

16. Élément d'accouplement selon la revendication 14, **caractérisé en ce que** l'alésage (32) présente sur son fond une rainure d'entraînement (24a) qui est disposée en étant tournée de 90° par rapport à l'entraîneur (26) en forme de tenon prévu sur l'une des faces frontales.
